# EUROPÄISCHE PATENTANMELDUNG

(11) **EP 3 832 085 A1**
(43) Veröffentlichungstag der Anmeldung: **09.06.2021**
(21) Anmeldenummer: 20211929.3
(22) Anmeldetag: 04.12.2020
(51) Int. Cl.: F02B 37/22, F02B 37/18, F02B 37/10, F02B 39/10, F02B 37/02, F02D 9/06, F02B 75/22

(54) **BRENNKRAFTMASCHINE**

(30) Priorität: 06.12.2019 AT 510762019
(71) Anmelder: AVL List GmbH, 8020 Graz (AT)
(72) Erfinder: LEICHTFRIED, Christoph, 8045 GRAZ (AT)
(74) Vertreter: Babeluk, Michael

(57) **Zusammenfassung**

Die Erfindung betrifft eine Brennkraftmaschine (1) und ein Verfahren zum Betrieb dieser, mit zumindest einem Abgasturbolader, der einen Verdichter (2) sowie eine mit dem Verdichter (2) über eine gemeinsame Welle (7) verbundene Turbine (6) aufweist und mit zumindest zwei Gruppen (G) von Zylindern (Z), die mit einem Einlassstrang (E) und je einem Auslassstrang (A1, A2) verbunden sind. Aufgabe der vorliegenden Erfindung ist es eine Möglichkeit zur Verringerung des Turbolochs für Bremsmanöver anzugeben. Diese Aufgabe wird erfindungsgemäß dadurch gelöst, dass der ersten Gruppe von Zylindern (Z) ein erster Auslassstrang (A1) und der zweiten Gruppe von Zylindern (Z) ein zweiter Auslassstrang (A2) zugeordnet sind, über die die beiden Gruppe (G) jeweils mit der Turbine (6) strömungsverbindbar ist und dass in jedem Auslassstrang (A1, A2) zumindest ein Sperrelement (4) in Strömungsrichtung vor einem Eintritt (12) der Turbine (6) angeordnet ist.

## Beschreibung

Die Erfindung betrifft eine Brennkraftmaschine, mit zumindest einem Abgasturbolader, der einen Verdichter sowie eine mit dem Verdichter über eine gemeinsame Welle verbundene Turbine aufweist und mit zumindest zwei Gruppen von Zylindern, die mit einem Einlassstrang und je einem Auslassstrang verbunden sind.

Zur Steigerung der Leistung wird die Frischluft vor Einbringung in den Zylinder in aller Regelmäßigkeit bei Brennkraftmaschinen aufgeladen. Das heißt es wird durch einen Verdichter die Frischluft auf ein höheres Druckniveau gebracht. Zum Antrieb des Verdichters kann beispielsweise ein Antrieb über die Verbindung mit der Kurbelwelle der Brennkraftmaschine oder eine elektrische Maschine verwendet werden.

Günstigerweise wird die Energie des Abgases durch einen Abgasturbolader genutzt. Ein Abgasturbolader weist einen Verdichter und eine Turbine auf. Dieser zeichnet sich dadurch aus, dass der Verdichter durch die Turbine angetrieben wird und die Turbine wiederum die Entspannung des Abgases nutzt.

Nachteilig an derartigen Abgasturboladern ist jedoch, dass bei niedrigen Motordrehzahlen nur geringe Mengen an Abgas zum Antrieb des Verdichters über die Turbine verfügbar sind. Dieser Effekt wird als sogenanntes Turboloch bezeichnet.

Derartige Brennkraftmaschinen sind beispielsweise aus der DE 10 2016 203 823 B3 bekannt. Diese zeigt eine Anordnung zur Vermeidung des Turbolochs. Dabei ist eine selektive Zylinderdeaktivierung vorgesehen. Eine Gruppe von Zylindern wird bei geringerem Leistungsbedarf deaktiviert. Die deaktivierbare Gruppe von Zylindern weist im Abgasstrang ein Absperrventil auf. Dieses Absperrventil dient dazu, den Übertritt von Abgas aus dem zweiten Abgasstrang von den arbeitenden Zylindern in die deaktivierten Zylinder zu verhindern. Das Turboloch wird derart verringert, dass eine kleinere Turbine eingesetzt wird, die nur für einen Anteil des Massenstroms geeignet ist. Über ein sogenanntes Wastegate wird der Abgasmassenstrom, der nicht von der Turbine abgearbeitet werden kann an der Turbine vorbei geleitet. Dadurch kann das Ansprechverhalten verbessert werden und der Turbolader spricht auch bei geringeren Motordrehzahlen und dementsprechend schneller an.

Bei Bremsmanövern wird bei dieser Brennkraftmaschine eine Gruppe von Zylindern deaktiviert, und die Einspritzung in die übrige aktive Gruppe Zylinder reduziert. So wird die Drehzahl der Brennkraftmaschine reduziert. Die Turbine kann durch die geringeren Abgasmengen und den dadurch fehlenden Durchsatz ab einem gewissen Punkt nicht mehr ausreichend Leistung für den Verdichter bereitstellen.

Durch die variable Turbinengeometrie kommt es zwar zu einem schnelleren Ansprechen bei erneutem Beschleunigungsbefehl, aber die Leistungssteigerung durch den Turbolader ist trotzdem nicht sofort bei Ende des Bremsmanövers verfügbar. Es wird nur eine Teillaststrategie vorgelegt. Dieses Vorgehen ist für einen wechselnden Betrieb nicht geeignet.

Aufgabe der vorliegenden Erfindung ist es eine Möglichkeit zur Verringerung des Turbolochs für Bremsmanöver anzugeben.

Diese Aufgabe wird erfindungsgemäß dadurch gelöst, dass der ersten Gruppe von Zylindern ein erster Auslassstrang und der zweiten Gruppe von Zylindern ein zweiter Auslassstrang zugeordnet sind, über die die beiden Gruppe jeweils mit der Turbine strömungsverbindbar ist und dass in jedem Auslassstrang zumindest ein Sperrelement in Strömungsrichtung vor einem Eintritt der Turbine angeordnet ist. Kommt es bei dieser Anordnung nun zu einer Abnahme der Abgasmenge in Folge von verminderter Einspritzung bei einem Bremsmanöver, so wird das Sperrelement verschlossen. Dadurch kommt es im Auslassstrang zu einem Druckanstieg und Temperaturanstieg .

Soll nun nach diesem Bremsmanöver erneut mehr Leistung durch die Brennkraftmaschine bei Beschleunigung bereitgestellt werden, so wird das Absperrelement geöffnet und der an der Turbine anliegende Druck sowie die Temperatur im Abgas ist höher und das verzögerte Ansprechen der Turbine und damit des Abgasturboladers wird somit umgangen. Das Turboloch kann mit dieser Anordnung daher nach Bremsmanövern durch diesen vorherigen Druckaufbau und den nachfolgenden Abbau vermieden werden. Weiters kann dadurch besonders vorteilhaft Energie, die beim Bremsen sonst verloren ginge in der Turbine danach abgebaut und so erneut zur Verdichtung der Ladeluft genutzt werden.

Durch die Öffnung des Absperrelements nach Ende des Bremsmanövers, fällt der Druck im Abgasstrang von dem höheren Druckniveau wieder auf ein niedrigeres Druckniveau, das noch höher ist als das ursprüngliche Druckniveau vor dem Bremsmanöver. Die Temperatur bleibt annähernd gleich. Die an der Turbine abgegebenen Arbeit wird durch die höhere Temperatur und das erhöhte Druckniveau gesteigert. Außerdem liegt für einen kurzen Moment während des Druckabfalls ein höherer Differenzdruck an der Turbine an. Das sorgt für einen zusätzlichen Leistungsschub an der Turbine.

Ein weiterer positiver Effekt entsteht durch diese Aufstauung, die den Druck im Auslassstrang bis zum Zylinder erhöht und dadurch auch in die Brennkammer rückwirkt. Dadurch entsteht ein, die Kurbelwelle und den Kolben bremsender Effekt durch die für den Kolben erhöhte Pumparbeit, der während des Bremsmanövers höchst erwünscht ist. Dieser Druckanstieg führt wiederum zu einer Temperaturerhöhung im aufgestauten Abgas.

Der Bremseffekt ist verschleiß- und partikelfrei, jedoch ist das Bremssystem an die neuen Gegebenheiten adaptiert, um die radbasierte Bremsbalance zu wahren.

Der Druck im Antriebsstrang verändert sich in einer beispielhaften Ausführung von 1 bar zu etwa 5 bar. Dieser Druckanstieg führt zu einer Temperaturerhöhung von 100 °C zu beispielsweise 600 °C.

Bei dieser Lösung wird Energie genutzten, die normalerweise in der Bremsanlage verloren geht. Diese Energie kann zur Verringerung des Turbolochs benützt werden. Sollte der Abgasturbolader auch eine elektrische Maschine besitzen kann diese Energie auch direkt in Strom umgewandelt werden.

Durch die erfindungsgemäße Lösung lässt sich die Verteilung des mechanischen Bremsens zum regenerativen Bremsen regeln. Somit kann die Temperatur der mechanischen Bremsen und damit der Wärmeeintrag in die Reifen beeinflusst werden. Die Reduktion der Reifentemperatur liegt bei etwa 4 °C.

Diese Aufgabe wird ebenfalls durch ein Fahrzeug mit einer derartigen Brennkraftmaschine, sowie durch ein Verfahren zum Betreiben dieser Brennkraftmaschine erfüllt, das vorsieht, dass in einem Bremsmodus, zumindest ein Sperrelement wenigstens teilweise verschlossen wird, sodass ein Strömungswiderstand in dem Auslassstrang, in dem dieses Sperrelement angeordnet ist, erhöht wird und ein Druckanstieg in diesem Auslassstrang vor der Turbine induziert wird, und dass in einem Antriebsmodus, das Sperrelement zumindest teilweise geöffnet wird, sodass der Strömungswiderstand sinkt.

Der Verdichter und die Turbine sind über eine gemeinsame Welle verbunden. Über die Welle wird die kinetische Rotationsenergie von der Turbine auf den Verdichter übertragen und derart das Druckniveau der Ladeluft angehoben.

Die betreffende Brennkraftmaschine weist zumindest zwei Gruppen von Zylindern auf, dabei sind in jeder Gruppe von Zylindern zumindest zwei Zylinder vorgesehen, die günstigerweise in einer Reihe angeordnet sind.

Die beiden Gruppen von Zylindern weisen einen gemeinsamen Einlassstrang auf, über den, den Zylindern Frischluft vulgo Ladeluft zugeführt wird.

Eine Gruppe von Zylindern teilt sich gemeinsam einen großen Teil des Auslassstrangs, wobei der Bereich nahe am Zylinder separat zu den einzelnen Zylindern führt und diese mit dem Rest des Auslassstrangs verbindet. Die beiden Gruppen haben jedoch separate Auslasstränge, die die Brennräume der Zylinder mit der Turbine des Abgasturboladers verbinden.

Es strömt Frischluft zum Verdichter, diese wird dort komprimiert und über ein Gaswechselventil in den Brennraum des Zylinders gepresst, nach erfolgter Verbrennung, wird das Abgas aus dem Brennraum durch ein Gaswechselventil in den Auslassstrang ausgestoßen.

Unter einem Sperrelement versteht sich hier eine Klappe, ein Sperrventil oder ein ähnlich geartetes Element, das geeignet ist, den Massenstrom des Abgases in Strömungsrichtung vor diesem Sperrelement aufzustauen.

Die Turbine hat zumindest einen Eintritt, und sie kann pro Eintritt mehrere Eingänge haben. So beschreibt der Eintritt hier den Eintritt auf einem bestimmten Level der Turbine, in einer bestimmten Stufe. Die mehrere Eingänge pro Eintritt sind demnach alle an einer Stufe angeordnet und teilen nur den Massenstrom des Abgases auf ein Turbinenrad der Turbine auf.

Es ist besonders günstig, wenn zumindest zwei Zylinder in einer ersten Gruppe der zwei Gruppen vorgesehen sind und wenn zumindest zwei Zylinder in einer zweiten Gruppe vorgesehen sind, wobei jeder Zylinder mit dem jeweiligen Auslassstrang verbunden ist, und wenn in den auf die Zylinder aufgeteilten Bereichen des Auslassstrangs jeweils zumindest ein Sperrelement in unmittelbarer Nähe des jeweiligen Zylinders angeordnet ist.

In unmittelbarer Nähe heißt, dass das Volumen zwischen Zylinder und Sperrelement kleiner als das jeweilige Zylindervolumen ist.

Umso näher die Absperrelemente an den Zylindern angeordnet sind, desto schneller tritt ein zusätzlicher Bremseffekt über die Aufstauung von Abgas auf. Dadurch kann das benötigte Bremsmoment an anderen Bremsvorrichtungen verringert werden. Abnutzung dieser kann verhindert werden und ein schnelleres Abbremsen wird dadurch ermöglicht.

Um den Betrieb in Teillast und nach dem Starten möglichst zu optimieren und das Anfahren des Abgasturboladers zu verbessern, ist in einer besonderen Ausführung vorgesehen, dass jedem Auslassstrang zumindest ein Bypassventil zugeordnet ist, durch das bei Öffnung des Bypassventils Abgas an der Turbine vorbei geleitet werden kann. Dadurch ist es möglich eine kleinere Turbine vorzusehen und überschüssiges Abgas, das nicht durch die Turbine abgearbeitet werden kann abzublasen. Ein derartiger Bypass ist auch unter dem Namen Wastegate bekannt.

Es ist besonders vorteilhaft, wenn eine Gruppe Zylinder mit dem ersten Auslassstrang und ein Gruppe Zylinder mit dem zweiten Auslassstrang verbunden ist, und dass parallel zu der Turbine eine Verbindungsleitung von dem ersten Auslassstrang zum zweiten Auslassstrang vorgesehen ist, der die beiden Auslasstränge miteinander strömungsverbindet oder strömungsverbindbar macht.

Im Zuge dieser Erfindung bedeutet der Ausdruck "strömungsverbindet", dass eine dauerhafte Strömungsverbindung zwischen zwei Komponenten besteht. Der Begriff strömungsverbindbar bezeichnet den Umstand, dass zwei Komponenten durch eine Leitung nur im Stande sind verbunden zu werden, etwa durch geeignete Ventilstellung, wobei das Ventil in der zwischen den einzelnen Komponenten angeordnete Leitung verortet ist.

Die oben erwähnte Strömungsverbindbarkeit wird besonders einfach hergestellt, wenn in der Verbindungsleitung ein Verbindungsventil angeordnet ist.

In einer vorteilhaften Ausführung ist vorgesehen, dass die Turbine eine variable Geometrie (VTG) aufweist. Dadurch ist wiederum die Turbine auch für einen Teillastbetrieb einfach einsetzbar.

Um nach dem Starten, oder in einem Teillastbetrieb mit sehr geringem Leistungsbedarf einen ausreichenden Verdichtungseffekt durch den Abgasturbolader erzielen zu können, ist es günstig, wenn die Turbine und der Verdichter über die gemeinsame Welle mit einer elektrischen Maschine verbunden sind. Die elektrische Maschine springt dann als Elektromotor in den Fällen, in denen das Turboloch nicht mit den obigen Methoden und Vorsehungen überwunden werden kann, ein und gleicht diesen Mangel des Abgasturboladers aus. Das sorgt für eine besonders ruhiges Fahrverhalten.

Um gleichmäßige Belastungen an der Turbine im Vollastbetrieb zu erreichen, ist es vorteilhaft, wenn die Turbine zumindest zwei Eingänge für einen Eintritt aufweist, wobei jeder Auslassstrang mit zumindest einem Eingang verbunden ist, wobei der erste Auslassstrang mit einem anderen Eingang oder anderen Eingängen der Turbine verbunden ist, als der zweite Auslassstrang.

Eine Variante sieht einen speziellen Eintritt an der Turbine für dieses Bremsmanövertaugliche Verfahren vor. Dabei ist dieser weitere Eintritt derart ausgebildet, dass dieser zumindest mit den Auslasssträngen strömungsverbindbar ist, und er weist zumindest einen Eingang, und vorzugsweise zwei Eingänge auf.

Dabei weist dieser Eintritt einen kleineren Strömungsquerschnitt als der obige reguläre Eintritt auf. Durch diesen verkleinerten Strömungsquerschnitt in dem weiteren Eintritt wird ebenfalls der Druck erhöht und die Pumparbeit am Kolben vergrößert sich dementsprechend. Außerdem erhöht sich die Temperatur des Abgases. Gemeinsam mit dem erhöhten Druck führt die erhöhte Temperatur zu vermehrter Abgabe von Leistung an der Turbine.

Es kann dabei zusätzlich in einer Zuleitung zum weiteren Eintritt der Turbine zumindest ein Ventil zu einem der beiden Auslassstränge und vorzugsweise zu beiden Auslasssträngen vorgesehen sein. Dadurch kann diese Leitung in jedem anderen Zustand abseits von Bremsmanöver gesperrt werden.

Es ist bei einem günstigen Verfahren vorgesehen, dass im Bremsmodus beide Sperrelemente wenigstens teilweise verschlossen werden - vorzugsweise parallel zueinander - und dass im Antriebsmodus beide Sperrelemente wenigstens teilweise geöffnet werden, vorzugsweise parallel zueinander.

Sinnvollerweise ist vorgesehen, dass bei einem Bremsmanöver alle Bypassventile verschlossen werden, um den Strömungswiderstand auf sein Maximum zu erhöhen und den Druck sowie die Temperatur im Abgas größtmöglich zu erhöhen.

Besonders bevorzugt wird das Verbindungsventil in der parallel zu der Turbine vorgesehenen Verbindungsleitung von dem ersten Auslassstrang zum zweiten Auslassstrang geöffnet, und es wird das Sperrelement im ersten Auslassstrang vor der Turbine geschlossen und es wird das Sperrelement im zweiten Auslassstrang vor der Turbine zumindest teilweise geöffnet, sodass das Abgas vom ersten Auslassstrang zum zweiten Auslassstrang und von dort über das zumindest teilweise geöffnete Sperrelement in zumindest einen Eingang der Turbine strömt.

Dadurch wird der Abgasstrom von dem ersten Auslassstrang zum zweiten Auslassstrang umgeleitet. Dadurch entsteht der Vorteil, dass sich der Strömungsquerschnitt verkleinert und in dieser Folge der Druck und die Temperatur wie oben beschrieben ebenfalls steigen.

Es ist von besonderem Vorteil, wenn das zumindest eine Ventil in der Zuleitung zum weiteren Eintritt der Turbine vorzugsweise beide Ventile in der Zuleitung im Bremsmodus zumindest teilweise geöffnet werden und im Antriebsmodus vollständig geschlossen werden, und wenn beide Sperrelemente zum Eintritt in die Turbine verschlossen werden. Dadurch wird erreicht, dass durch diese Umleitung zu dem weiteren Eintritt, der einen verringerten Strömungsquerschnitt aufweist, ein Druck- und Temperaturanstieg im Abgas stattfindet.

In weiterer Folge wird die Erfindung anhand der nicht einschränkenden Figuren näher erläutert. Es zeigen:
- Fig. 1: eine erste Ausführungsform einer erfindungsgemäßen Brennkraftmaschine;
- Fig. 2: eine zweite Ausführungsform einer erfindungsgemäßen Brennkraftmaschine;
- Fig. 3: eine dritte Ausführungsform einer erfindungsgemäßen Brennkraftmaschine;
- Fig. 4: eine vierte Ausführungsform einer erfindungsgemäßen Brennkraftmaschine; und
- Fig. 5: eine fünfte Ausführungsform einer erfindungsgemäßen Brennkraftmaschine.

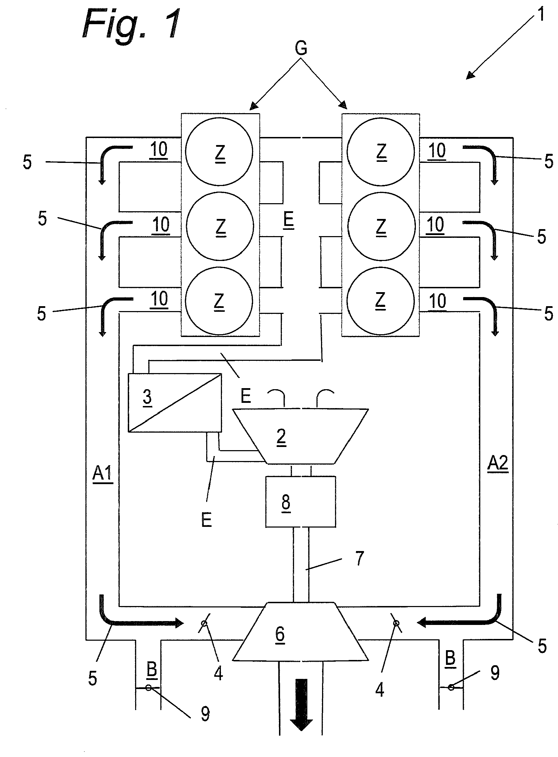

In Fig. 1 ist eine erfindungsgemäße Brennkraftmaschine 1 abgebildet, die zwei Gruppen G von Zylindern Z aufweist. Dabei sind in jeder Gruppe G drei Zylinder Z in Reihe angeordnet. Die beiden Gruppen G weisen einen gemeinsamen Einlassstrang E auf. Im Einlassstrang E sind ein Verdichter 2 und in Strömungsrichtung danach ein Zwischenkühler 3 angeordnet.

Die Gruppen G sind je mit einem Auslassstrang, einem ersten Auslassstrang A1 und einem zweiten Auslassstrang A2 strömungsverbunden. In jedem Auslassstrang A1, A2 ist ein Absperrelement 4 angeordnet. Das Absperrelement 4 ist in der gezeigten Ausführung schematisch als Absperrklappe eingezeichnet.

Dieses Absperrelement 4 kann in alternativen Ausführungen natürlich durch jede Art von Absperrelement ausgetauscht werden, das einen Durchfluss reduzieren und sperren kann.

Nach dem Absperrelement 4 folgt in Strömungsrichtung eines Abgases, das mit Pfeil 5 gekennzeichnet ist, eine Turbine 6. Die Turbine 6 und der Verdichter 2 sind über eine gemeinsame Welle 7 zu einem Abgasturbolader verbunden. Zwischen Verdichter 2 und Turbine 6 ist zusätzlich eine elektrische Maschine 8 angeordnet, der ein Antriebsmoment für den Verdichter 2 im Teillastbereich und bei Anfahrt nach dem Start bereitstellen kann. Die elektrische Maschine 8 kann in einer günstigen Ausführung als Elektromotor und als Generator eingesetzt werden.

Von dem Auslassstrang A1 und A2 zweigt eine Bypassleitung B ab, die mit einem Bypassventil 9 verschließbar ist.

Bei Betrieb wird nun Frischluft in den Einlassstrang E eingebracht, im Verdichter 2 komprimiert und auf ein höheres Druckniveau gebracht. Dadurch steigt die Temperatur im eingebrachten Gas. Die Temperatur wird durch den Zwischenkühler 3 wieder herabgesetzt. In die Ladeluft wird Brennstoff eingespritzt, der in einem nicht näher dargestellten Brennraum eines Zylinders Z verbrannt wird. Durch die explosionsartige Verbrennung wird eine nicht gezeigte Kurbelwelle angetrieben. Das Abgas 5 wird über einzelne Bereiche 10 des Auslassstrangs A1, A2 nahe den Zylindern Z von jedem einzelnen Zylinder Z zusammengesammelt und in den gemeinsamen Teil des Auslassstrangs A1, A2 geführt.

Im Auslassstrang A1, A2 strömt das Abgas 5 am geöffneten oder teilweise geöffneten Absperrelement 4 vorbei in die Turbine 6, wo das Abgas entspannt wird.

Wenn das abzuarbeitende Abgas 5 die höchste mögliche Menge der Turbine 6 übersteigt, wird das Bypassventil 9 geöffnet und das Abgas 5 durch die Bypassleitung B an der Turbine 6 vorbei geführt.

Durch die Entspannung des Abgases 5 treibt die Turbine 6 den Verdichter 2 an der gemeinsamen Welle 7 an. Wird mehr Energie aus dem Abgas 5 gewonnen, als zur Verdichtung benötigt wird, etwa bei Bremsmanövern, kann diese über die elektrische Maschine 8 als elektrische Energie wiedergewonnen werden, wenn die elektrische Maschine 8 auch als Generator einsetzbar ist.

Befindet sich die Brennkraftmaschine 1 nun durch Befehl eines Fahrers im Bremsmodus, so wird das Absperrelement 4 teilweise oder ganz verschlossen, sodass der Druck und die Temperatur des Abgases 5 vor dem Absperrelement 4 steigen. Das Bypassventil 9 ist im Bremsmodus immer geschlossen. Der Druck vor dem Absperrelement 4 kann in einem beispielhaften Verfahren von 1 bar auf 5 bar steigen. Die Temperatur verändert sich dabei von 100 °C zu 600 °C. Da die warme Luft eine deutlich geringere Dichte besitzt, steigt der Volumenstrom nach dem Absperrelement 4 an. Dieser führt zu einem erneuten Druckanstieg vor der Turbine 6. Durch den erhöhten Druck vor der Turbine 6 kann mechanische Arbeit am Turbinenrad erzeugt werden. Sollte eine elektrische Maschine 8 mit dem Turbinenrad verbunden sein, kann daraus elektrische Energie erzeugt werden. Ansonsten wird dadurch die Drehzahl des Abgasturboladers erhöht.

Mit dem Ende des Bremsmanövers wird das Absperrelement 4 geöffnet. Das Abgas 5 strömt plötzlich weiter und der an der Turbine 6 anliegende Druck steigt kurzzeitig an. Im angeführten Beispiel steigt der Druck an der Turbine 6 auf etwa 2 bis 5 bar an. Das ergibt einen zusätzlichen Schub für die Turbine 6. Das durch die Absperrung erhöhte Energieniveau wird an der Turbine 6 abgearbeitet. Die beim Beschleunigen zusätzlich benötigte Energie wird dadurch schnell bereitgestellt.

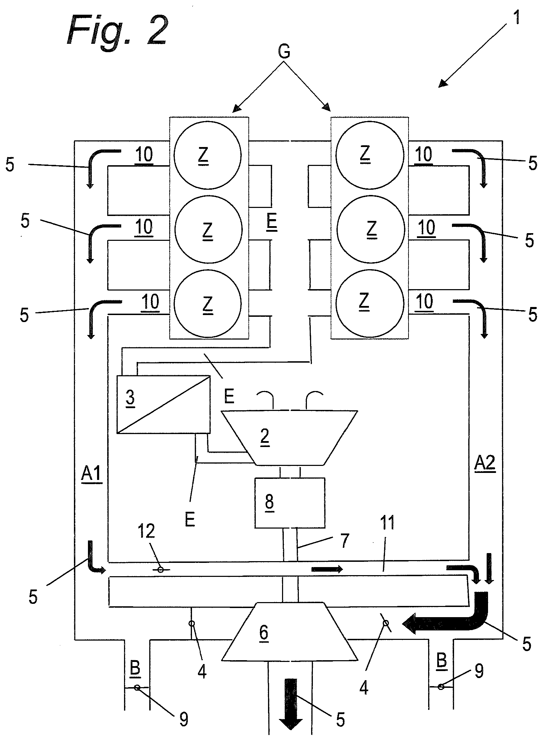

Die in Fig. 2 dargestellte zweite Ausführungsform der Brennkraftmaschine 1 wird nur anhand ihrer Unterschiede zur ersten Ausführung beschrieben. Ansonsten unterscheiden sich die beiden Ausführungsformen nicht voneinander.

Anstatt zweier gleicher Auslassstränge A1, A2 unterscheiden sich hier der erste Auslassstrang A1 und der zweite Auslassstrang A2 voneinander. Dabei ist zwischen diesen beiden Auslasssträngen A1, A2 eine Verbindungsleitung 11 vorgesehen, die diese parallel zur Turbine 6 miteinander verbindet. Die Verbindungsleitung 11 kann auch als Klappe ausgeführt sein, wenn die beiden Auslassstränge A1, A2 sich schon grundsätzlich berühren.

So kann neben einem vollständigen Sperren des Auslassstrangs A1, A2 noch eine weitere Stellung realisiert werden. Es kann beispielsweise nur ein Absperrelement 4 geschlossen werden, beispielsweise das Absperrelement 4 des ersten Auslassstrangs A1. Dann strömt das Abgas 5 vom ersten Auslassstrang A1 über die geöffnete Verbindungsleitung 11 in den zweiten Auslassstrang A2. Bei geschlossenem Absperrelement 4 des zweiten Auslassstrangs A2 verhält es sich analog dazu umgekehrt.

Durch dieses Vorgehen wird der Strömungsquerschnitt verringert und dementsprechend steigen wiederum Druck und Temperatur. Der gesamte Massenstrom des Motors muss mit einer erhöhten Abgastemperatur durch nur einen Turbineneintritt. Der Druck vor Turbine 6 kann in einem beispielhaften Verfahren von 1 bar auf 2 bar steigen.

Optional kann in dieser Verbindungsleitung 11 ein Verbindungsventil 12 vorgesehen sein, welches die Strömung durch diese Verbindungsleitung 11 sperrt. Dadurch gibt es im Motorbetrieb keine Wechselwirkungen zwischen den Auslasssträngen A1, A2.

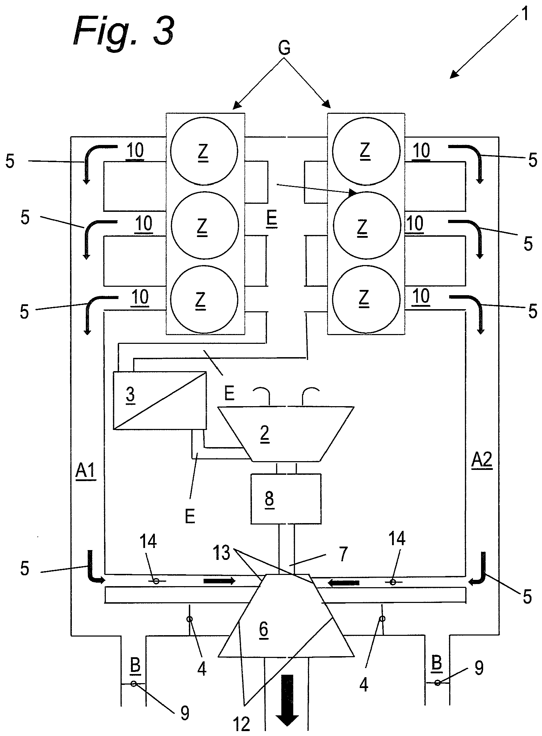

Im Unterschied zur ersten Ausführung weist die Brennkraftmaschine 1 in der dritten Ausführung, siehe Fig. 3, eine Turbine 6 mit zwei zusätzlichen Eintritten 13 auf. Durch einen regulären Eintritt 12 kann durch einen Eingang vom ersten Auslassstrang A1 her und durch einen anderen Eingang vom zweiten Auslassstrang A2 her Abgas 5 einströmen. Während eines Bremsmanövers sperren die Absperrelemente 4 den regulären Eintritt. Gleichzeitig öffnen sich die Absperrelemente 14. Der gesamte Motormassenstrom muss durch einen wesentlich kleineren Turbineneintritt 13. Dadurch staut sich das Abgas im dem Abgasstrang auf. Der Druck vor Turbine 6 kann in einem beispielhaften Verfahren von 1 bar auf 3 bar steigen.

Optional kann die Turbine 6 in allen gezeigten Ausführungen eine variable Turbinengeometrie aufweisen. Auch die Anzahl der Eingänge ist variabel und nicht auf die hier angezeigten Ausführungen beschränkt.

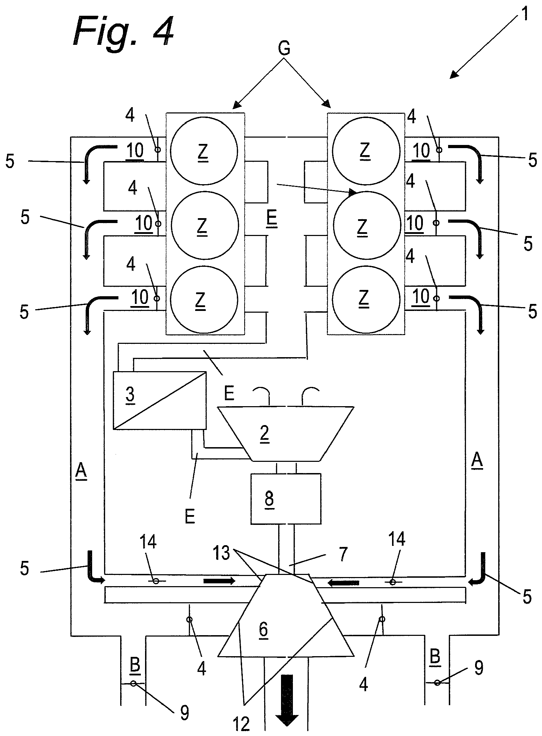

In einer alternativen vierten Ausführung der Brennkraftmaschine 1 gemäß Fig. 4 ist in jedem Bereich 10 nahe der Zylinder Z jeweils ein Absperrelement 4 vorgesehen. Die Bremswirkung durch die Drucksteigerung im Auslassstrang A setzt dadurch besonders schnell nach dem Schließen des Absperrelements 4 durch die plötzlich erhöhte Pumparbeit in jedem Zylinder Z ein.

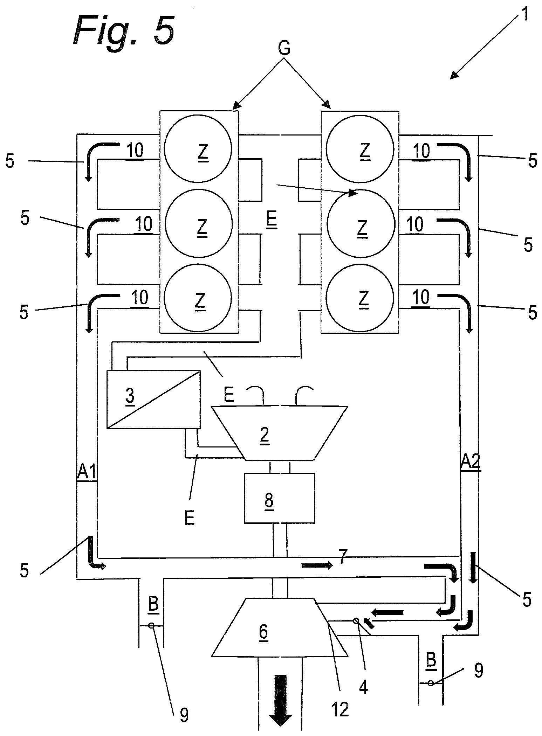

Fig. 5 zeigt eine fünfte Ausführung, die im Unterschied zur dritten Ausführung die beiden Massenströme des Abgases 5 aus dem ersten Auslassstrang A1 und dem zweiten Auslassstrang A2 zu zwei parallel verlaufenden Fluten zusammensammelt. Es sind von beiden Auslasssträngen A1, A2 Bypassleitungen B vorgesehen. Vor dem Eintritt 12 in die Turbine 6 ist eine Klappe als Absperrelement 4 angeordnet. Bei Einleitung des Bremsmanövers wird auch hier das Absperrelement 4 verschlossen und nach Beendigung wieder ganz oder teilweise geöffnet. Durch das Schließen des Absperrelements 4 werden die beiden Fluten zusammengeführt und so ein Druckanstieg durch die plötzliche Querschnittsverengung erzielt. In der gezeigten Ausführung ist nur eine Flut mit dem Absperrelement 4 ausgestattet. In einer alternativen Ausgestaltung können auch beide Fluten mit einem Absperrelement ausgestattet sein.

Der Abgasturbolader wird in dieser Ausführung als Twin-Scroll-Lader bezeichnet. Die Turbine 6 wird ebenfalls als Twin-Scroll-Turbine bezeichnet und weist einen sogenannten Flutenteiler auf, der den Kanal in zwei parallel verlaufende Strömungskanäle einteilt. Durch den zwei Fluten aufweisenden Abgaskrümmer wird das Abgas 5 im normalen Betrieb ohne Bremsmanöver zweigeteilt auf das Turbinenlaufrad aufgebracht.

Das Absperrelement 4 verschließt im geöffneten Zustand die Verbindung der beiden Fluten und öffnet diese Verbindung in geschlossenem und teilweise geschlossenem Zustand.

## Patentansprüche

1. Brennkraftmaschine (1), mit zumindest einem Abgasturbolader, der einen Verdichter (2) sowie eine mit dem Verdichter (2) über eine gemeinsame Welle (7) verbundene Turbine (6) aufweist und mit zumindest zwei Gruppen (G) von Zylindern (Z), die mit einem Einlassstrang (E) und je einem Auslassstrang (A1, A2) verbunden sind, **dadurch gekennzeichnet, dass** der ersten Gruppe von Zylindern (Z) ein erster Auslassstrang (A1) und der zweiten Gruppe von Zylindern (Z) ein zweiter Auslassstrang (A2) zugeordnet sind, über die die beiden Gruppe (G) jeweils mit der Turbine (6) strömungsverbindbar ist und dass in jedem Auslassstrang (A1, A2) zumindest ein Sperrelement (4) in Strömungsrichtung vor einem Eintritt (12) der Turbine (6) angeordnet ist.

2. Brennkraftmaschine (1) nach Anspruch 1, **dadurch gekennzeichnet, dass** zumindest zwei Zylinder (Z) in der ersten Gruppe (G) der zwei Gruppen (G) vorgesehen sind und dass zumindest zwei Zylinder (Z) in der zweiten Gruppe (G) vorgesehen sind, wobei jeder Zylinder (Z) mit dem jeweiligen Auslassstrang (A1, A2) verbunden ist, und dass in den auf die Zylinder (Z) aufgeteilten Bereichen (10) des Auslassstrangs (A1, A2) jeweils zumindest ein Sperrelement (4) in unmittelbarer Nähe des jeweiligen Zylinders (Z) angeordnet ist, sodass das Volumen zwischen Zylinder (Z) und Sperrelement (4) kleiner als das jeweilige Zylindervolumen ist.

3. Brennkraftmaschine (1) nach Anspruch 1 oder 2, **dadurch gekennzeichnet, dass** zu jedem Auslassstrang (A1, A2) zumindest ein Bypassventil (9) vorgesehen ist, durch das bei Öffnung des Bypassventils (9) Abgas (5) an der Turbine (6) vorbei geleitet werden kann.

4. Brennkraftmaschine (1) nach einem der Ansprüche 1 bis 3, **dadurch gekennzeichnet, dass** parallel zu der Turbine (6) eine Verbindungsleitung (11) von dem ersten Auslassstrang (A1) zum zweiten Auslassstrang (A2) vorgesehen ist, der die beiden Auslasstränge (A1, A2) miteinander strömungsverbindet oder strömungsverbindbar macht.

5. Brennkraftmaschine (1) nach Anspruch 4, **dadurch gekennzeichnet, dass** in der Verbindungsleitung (11) ein Verbindungsventil (12) angeordnet ist.

6. Brennkraftmaschine (1) nach einem der Ansprüche 1 bis 5, **dadurch gekennzeichnet, dass** die Turbine (6) eine variable Geometrie aufweist.

7. Brennkraftmaschine (1) nach einem der Ansprüche 1 bis 6, **dadurch gekennzeichnet, dass** die Turbine (6) und der Verdichter (2) über die gemeinsame Welle (7) mit einer elektrischen Maschine (8) verbunden sind.

8. Brennkraftmaschine (1) nach einem der Ansprüche 1 bis 7, **dadurch gekennzeichnet, dass** die Turbine (6) zumindest zwei Eingänge für einen Eintritt (12; 13) aufweist, wobei jeder Auslassstrang (A1, A2) mit zumindest einem Eingang verbunden ist, wobei der erste Auslassstrang (A1) mit einem anderen Eingang oder anderen Eingängen der Turbine (6) verbunden ist als der zweite Auslassstrang (A2).

9. Brennkraftmaschine (1) nach einem der Ansprüche 1 bis 8, **dadurch gekennzeichnet, dass** die Turbine (6) einen weiteren Eintritt (13) aufweist, der zumindest mit den Auslasssträngen (A1, A2) strömungsverbindbar ist, der zumindest einen Eingang, und vorzugsweise zwei Eingänge aufweist, wobei dieser weitere Eintritt (13) einen kleineren Strömungsquerschnitt als der Eintritt (12) aufweist.

10. Brennkraftmaschine (1) nach Anspruch 9, **dadurch gekennzeichnet, dass** in einer Zuleitung zum weiteren Eintritt (13) der Turbine (6) zumindest ein Ventil (14) zu einem der beiden Auslassstränge (A1, A2) und vorzugsweise zu beiden Auslasssträngen (A1, A2) vorgesehen ist.

11. Verfahren zum Betreiben einer Brennkraftmaschine (1) nach einem der Ansprüche 1 bis 10, **dadurch gekennzeichnet, dass** in einem Bremsmodus, zumindest ein Sperrelement (4) wenigstens teilweise verschlossen wird, sodass ein Strömungswiderstand in dem Auslassstrang (A1, A2), in dem dieses Sperrelement (4) angeordnet ist, erhöht wird und ein Druckanstieg in diesem Auslassstrang (A1, A2) vor der Turbine (6) induziert wird, und dass in einem Antriebsmodus, das Sperrelement (4) zumindest teilweise geöffnet wird, sodass der Strömungswiderstand sinkt.

12. Verfahren nach Anspruch 11 **dadurch gekennzeichnet, dass** im Bremsmodus beide Sperrelemente (4) wenigstens teilweise verschlossen werden - vorzugsweise parallel zueinander - und dass im Antriebsmodus beide Sperrelemente (4) wenigstens teilweise geöffnet werden, vorzugsweise parallel zueinander.

13. Verfahren nach einem der Ansprüche 11 oder 12, **dadurch gekennzeichnet, dass** alle Bypassventile (9) verschlossen werden.

14. Verfahren nach einem der Ansprüche 11 bis 13, **dadurch gekennzeichnet, dass** das Verbindungsventil (12) in der parallel zu der Turbine (6) vorgesehenen Verbindungsleitung (11) von dem ersten Auslassstrang (A1) zum zweiten Auslassstrang (A2) geöffnet wird, und dass das Sperrelement (4) im ersten Auslassstrang (A1) vor der Turbine (6) geschlossen wird und dass das Sperrelement (4) im zweiten Auslassstrang (A2) vor der Turbine (6) zumindest teilweise geöffnet wird, so dass das Abgas (5) vom ersten Auslassstrang (A1) zum zweiten Auslassstrang (A2) und von dort über das zumindest teilweise geöffnete Sperrelement (4) in zumindest einen Eingang der Turbine (6) strömt.

15. Verfahren nach einem der Ansprüche 11 bis 13, **dadurch gekennzeichnet, dass** das zumindest eine Ventil (14) in der Zuleitung zum weiteren Eintritt (13) der Turbine (6) vorzugsweise beide Ventile (14) in der Zuleitung im Bremsmodus zumindest teilweise geöffnet werden und im Antriebsmodus vollständig geschlossen werden, und dass beide Sperrelemente (4) zum Eintritt (12) in die Turbine (6) verschlossen werden.
